(19) Europäisches Patentamt
European Patent Office
Office européen des brevets

(11) EP 1 426 809 B1

(12) EUROPEAN PATENT SPECIFICATION

(45) Date of publication and mention of the grant of the patent:
**29.09.2010 Bulletin 2010/39**

(21) Application number: **01956936.7**

(22) Date of filing: **17.08.2001**

(51) Int Cl.:
*G02C 7/04* (2006.01) *C08G 81/02* (2006.01)
*C08F 8/00* (2006.01) *G02B 1/04* (2006.01)

(86) International application number:
**PCT/JP2001/007077**

(87) International publication number:
**WO 2003/021336 (13.03.2003 Gazette 2003/11)**

(54) **METHOD FOR PRODUCING POLYMER FOR OPHTHALMIC LENS AND OPHTHALMIC LENS**

VERFAHREN ZUR HERSTELLUNG EINES POLYMERS FÜR EINE AUGENOPTISCHE LINSE UND AUGENOPTISCHE LINSE

PROCEDE DE PRODUCTION DE POLYMERE DESTINE A DES LENTILLES OPHTALMIQUES ET LENTILLES OPHTALMIQUES CORRESPONDANTES

(84) Designated Contracting States:
**DE DK FR GB IE IT**

(43) Date of publication of application:
**09.06.2004 Bulletin 2004/24**

(73) Proprietor: **Johnson & Johnson Vision Care, Inc.**
**Jacksonville, FL 32256 (US)**

(72) Inventors:
- **YOKOTA, Mitsuru**
  **Otsu-shi, Shiga 520-0804 (JP)**
- **MORIKAWA, Yukie**
  **Kusatsu-shi, Shiga 525-0055 (JP)**
- **NAKAMURA, Masataka**
  **Otsu-shi, Shiga 520-0846 (JP)**

(74) Representative: **Fisher, Adrian John et al**
**Carpmaels & Ransford**
**One Southampton Row**
**London**
**WC1B 5HA (GB)**

(56) References cited:
**EP-A- 1 403 296**
**EP-A- 1 424 339**
**EP-A1- 0 219 196**
**WO-A-00/72052**
**WO-A1-91/04283**
**DE-A- 2 748 568**
**JP-A- 7 013 109**
**JP-A- 2000 191 667**
**JP-A- 2000 191 730**
**US-A- 4 260 725**
**US-A- 4 332 922**
**US-A- 4 920 184**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

This invention relates to a method for the manufacture of polymers that can be used suitably in ophthalmic lenses such as contact lenses, intraocular lenses and artificial cornea, and to ophthalmic lenses.

### Prior Art

In recent years, polymers of which one component is modified polysiloxanes and methacrylates containing siloxanyl groups such as tris(trimethylsiloxy) silylpropyl methacrylate have been developed and used as polymers for ophthalmic lenses having high oxygen permeability (Japanese Patent Application Laid-Open No. 60[1985]-142324 and Japanese Patent Application Laid-Open No. 54[1979]-24047).

However, the surface of polymers comprising these monomers or macromers have poor wettability because of the effects of siloxanyl groups or polysiloxane components that are introduced for the purpose of increasing oxygen permeability, and said polymers have not been desirable as polymers for ophthalmic lenses.

Further, when polymers are prepared by copolymerizing monomers of high water-absorbing capacity such as (meth)acrylic acids (or metal salts thereof) with the aforementioned monomers or macromers for the purpose of improving wettability, the water content enormously increased, and there has, as a result, been the drawback that oxygen permeability is decreased.

E-P-A-1424339 and EP-A-1403296 disclose ophtalmic lenses formed by polymerization of the manomer of formula (1) below. WO 00/72052 discloses surface treatment of lenses with reactive hydrophilic polymers.

### Disclosure of the Invention

This invention was developed for the purpose of eliminating the drawbacks of the conventional art and has the objective of providing polymers for ophthalmic lenses that have both high oxygen permeability and superior surface wettability.

The method of manufacture of polymers for ophthalmic lenses of this invention is a method of manufacture of polymers for ophthalmic lenses in which a polymer of which the polymerization component is monomer (a) having organosiloxane groups and a polymerizable group having a carbon-carbon unsaturated bond is reacted with a hydrophilic component (b) selected from compounds represented by formula (III) and formula (IV) below.

Further, the ophthalmic lens of this invention is an ophthalmic lens comprising polymers which are formed by chemical bonding of a polymer of which the essential polymerization component is at least one monomer (a) selected from a group represented by formula (I) with at least one hydrophilic component (b) selected from compounds represented by formula (III) and formula (IV):

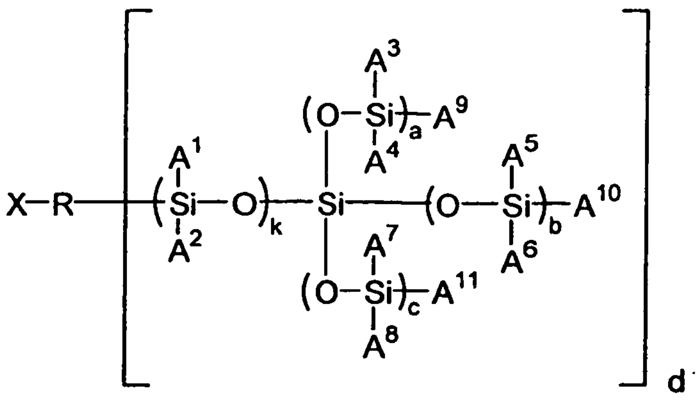

(I)

wherein, in formula (I), X is a polymerizable group having carbon-carbon unsaturated bonds; R is an alkyl group that may contain ether bonds and that may be substituted; $A^1$ to $A^{11}$ are selected from H, alkyl groups that may be substituted and aryl groups that may be substituted; k is an integer of 0 to 10; a, b and c are, respectively and independently, integers of 0 to 10, excepting the case k = a = b = c = 0; and d is an integer of 1 or 2;

$$CH_2{=}\ CH\text{-}CH_2\text{-}O(CH_2CH_2O)_rR^{41} \qquad (III)$$

$$OCN{-}Y\left[NHCOO(CH_2CH_2O)_mR^{42}\right]_n \qquad (IV)$$

wherein, in formulas (III) and (IV), r is an integer of 0 to 500; n is an integer of 1 or 2; $R^{41}$ is hydrogen or an alkyl group that may be substituted; m is an integer of 1 to 500; OCN-Y is a residue obtained by eliminating one or more NCO groups from isocyanate compounds having two or more functionality; and $R^{42}$ is an alkyl group that may be substituted.

## Embodiment of the Invention

We shall now describe the embodiment of this invention. The method of this invention is a method of manufacture of polymers for ophthalmic lenses in which a polymer of which the polymerization component is monomer (a) having organosiloxane groups and a polymerizable group having a carbon-carbon unsaturated bond is reacted with a hydrophilic component (b), as defined above.

It is desirable that the monomers (a) that are used in this invention be compounds represented by formula (I) below:

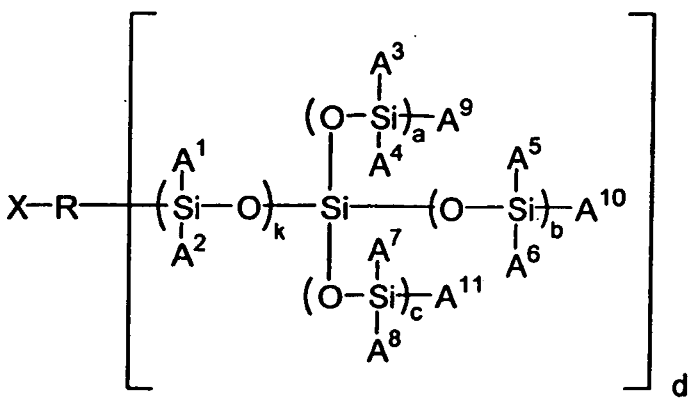

(I)

wherein, in formula (I), X is a polymerizable group having carbon-carbon unsaturated bonds; R is an alkyl group that may contain ether bonds and that may be substituted; $A^1$ to $A^{11}$ are selected from H, alkyl groups that may be substituted and aryl groups that may be substituted; k is an integer of 0 to 10; a, b and c are, respectively and independently, integers of 0 to 10, excepting the case k = a = b = c = 0; and d is an integer of 1 or 2.

The polymerizable group X, in formula (I), which has carbon-carbon unsaturated bonds may be any group as long as it is polymerizable and can include (meth)acrylic acid derivatives, styrene derivatives, (meth)acrylamide derivatives and vinyl ester derivatives. Of these, the use of groups represented by formulas (x1) and (x2) below is desirable:

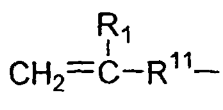

(x1)

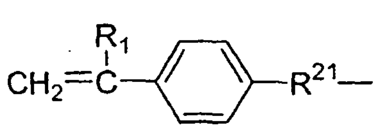

(x2)

wherein, in formulas (x1) and (x2), $R_1$ is H or a methyl group; $R^{11}$ is -COO-, -CONHCONR$^{31}$- and -CONR$^{31}$-; $R^{21}$ is a

direct bond and -CONR$^{31}$-; and $R^{31}$ is a substituent that can be selected from a hydrogen atom, an alkyl group that may be substituted and an aryl group that may be substituted.

The alkyl groups, in $R^{31}$, that may be substituted may be straight chain or branched chain and there are no particular limitations on them. Specific examples that can be cited include methyl groups, ethyl groups, propyl groups, isopropyl groups, butyl groups, hexyl groups, benzyl groups, phenethyl groups, hydroxymethyl groups, 2-hydroxyethyl groups, 2-hydroxypropyl groups, 3-hydroxypropyl groups, 2,3-dihydroxypropyl groups, 2-hydroxybutyl groups, 4-hydroxybutyl groups, 2-hydroxypentyl groups, 5-hydroxypentyl groups, 2-hydroxyhexyl groups, 6-hydroxyhexyl groups, 3-methoxy-2-hydroxypropyl groups, 3-ethoxy-2-hydroxypropyl groups, 3-[tris(trimethylsiloxy)silyl] propyl groups, 3-[bis(trimethylsiloxy)methylsilyl] propyl groups, 3-[trimethylsiloxydimethylsilyl] propyl groups and cyanoethyl groups. Of these, the use of substituents having hydroxyl groups is desirable from the standpoint of the reaction with the hydrophilic component (b).

There are no particular limitations on the aryl groups that may be substituted. However, those with 6 to 20 carbon atoms are preferable. Specific examples include phenyl groups, naphthyl groups, 4-hydroxyphenyl groups and 2-hydroxyphenyl groups.

It is desirable that R in formula (I) be a group represented by formula (II) below:

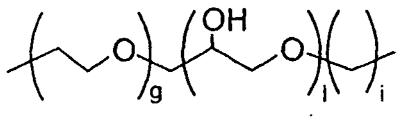 (II)

wherein, in formula (II), g is an integer of 0 to 3; 1 is an integer of 0 to 1; and i is an integer of 0 to 10. Of these, the use of direct bonds,

$-CH_2-CH(OH)CH_2O-(CH_2)_3-$ and $-(CH_2)_3-$ is desirable.

$A^1$ to $A^{11}$ in the organosiloxane groups are, respectively and independently, substituents selected from H, alkyl groups that may be substituted and aryl groups that may be substituted. Desirable examples include H, methyl groups, ethyl groups, propyl groups, butyl groups, pentyl groups, hexyl groups, 2-ethylhexyl groups, octyl groups, decyl group, undecyl groups, dodecyl groups, octadecyl groups, cyclohexyl groups, benzyl groups, phenyl groups, naphthyl groups and groups represented by formula (V) indicated below:

$$(CH_2)_pO(CH_2CH_2O)_qR^{51} \qquad (V)$$

wherein, in formula (V), p is an integer of 0 to 10, q is an integer of 0 to 200, and $R^{51}$ is a hydrogen atom or an alkyl group of 1 to 10 carbon atoms.

Of these, H, methyl groups, ethyl groups, phenyl groups, $(CH_2)_3OH$ and $(CH_2)_3O(CH_2CH_2O)H$ are preferable.

In formula (I), k is an integer of 0 to 10, and a, b and c, respectively and independently, are integers of 0 to 10, excepting the case k = a = b = c = 0. Organosiloxane groups, the use of which is particularly desirable, are tris(trimethylsiloxy)silyl groups, tris(dimethylsiloxy)silyl groups, tris(hydroxypropyldimethylsiloxy)silyl groups and tris(hydroxyethoxypropyldimethylsiloxy)silyl groups in which all of k, a, b and c denote 1 and bis(trimethylsiloxy)methylsilyl groups, bis(dimethylsiloxy)methylsilyl groups, bis(hydroxypropyldimethylsiloxy)methylsilyl groups and bis(hydroxyethoxypropyldimethylsiloxy)methylsilyl groups in which a denotes 0 and k, b and c denote 1.

There are cases in which either one of monomer (a) and hydrophilic component (b), for example, have a group having an active hydrogen such as a hydroxyl group or a thiol group and the other has an isocynate group or an acid anhydride group, or there are cases in which one has an -SiH group and the other has an allyl group that can undergo a hydrosilylation reaction. Of these, the case in which the monomer (a) has an hydroxyl group or an -SiH group is preferable. In order to introduce them into the monomer (a), substituents having $-CH_2-CH(OH)CH_2O-(CH_2)_3-$ as R in formula (I); H, $(CH_2)_3OH$ or $(CH_2)_3O(CH_2CH_2O)H$ as $A^1$ to $A^{11}$ in formula (I); or hydroxyl groups as $R^{31}$ in formulas (x1) and (x2) can preferably be used.

Of the monomers (a) indicated above, monomers as indicated by formulas (m1) to (m12) below are desirable from the standpoint of modified balance between oxygen permeability and wettablity, and of these, the monomers of formulas (m1) to (m4) and (m10) to (m12) are more preferable:

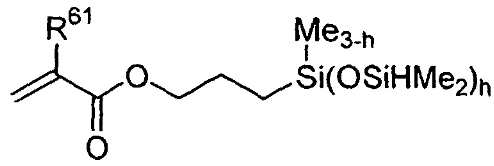

(m1)

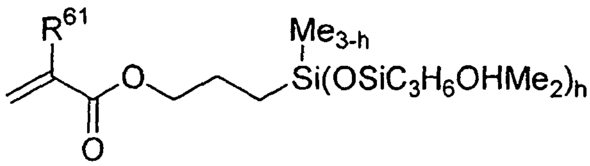

(m2)

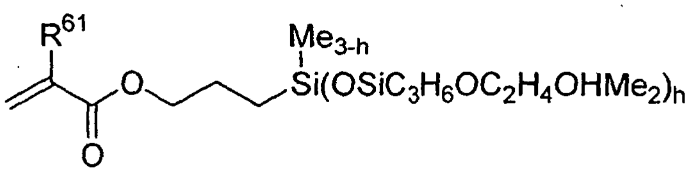

(m3)

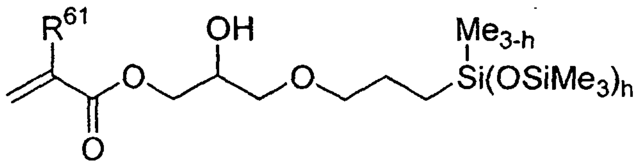

(m4)

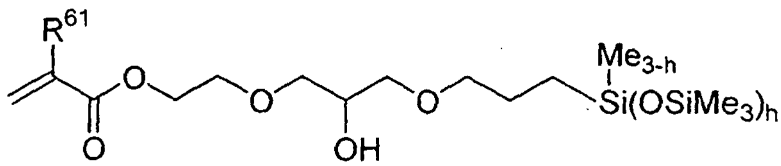

(m5)

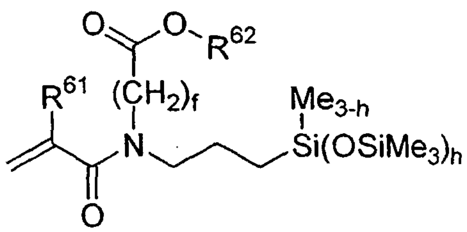

(m6)

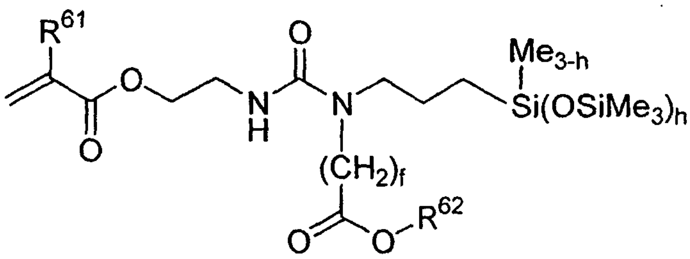

(m7)

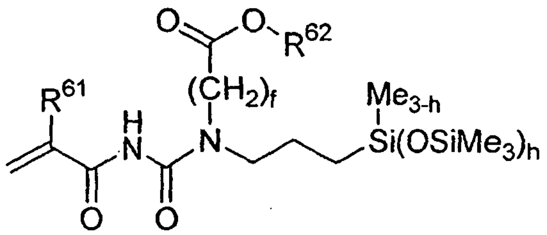

(m8)

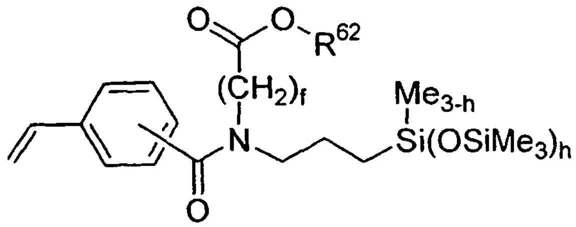

(m9)

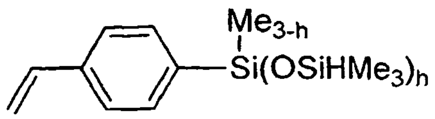

(m10)

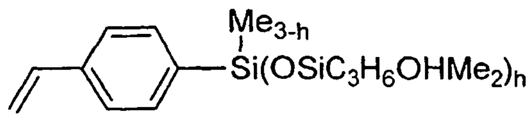

(m11)

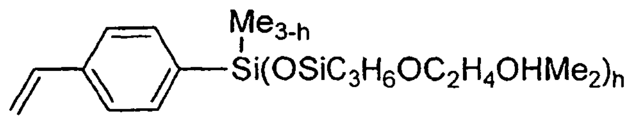

(m12)

wherein, in formulas (m1) to (m 12), $R^{61}$ is H or a methyl group; $R^{62}$ is a substituent selected from H, an alkyl group that may be substituted and an aryl group that may be substituted; h is an integer of 1 to 3; and f is an integer of 1 to 10.

Specific examples of $R^{62}$ that can be cited include methyl groups, ethyl groups, propyl groups, isopropyl groups, butyl groups, isobutyl groups, sec-butyl groups, tert-butyl groups, pentyl groups, hexyl groups, 2-ethylhexyl groups, octyl groups, decyl groups, undecyl groups, dodecyl groups, octadecyl groups, cyclopentyl groups, cyclohexyl groups, benzyl groups, hydroxymethyl groups, 2-hydroxyethyl groups, 2-hydroxypropyl groups, 3-hydroxypropyl groups, 2,3-dihydroxypropyl groups, 2-hydroxybutyl groups, 4-hydroxybutyl groups, 2-hydroxypentyl groups, 5-hydroxypentyl groups, 2-hydroxyhexyl groups, 6-hydroxyhexyl groups, 3-methoxy-2-hydroxypropyl groups, 3-ethoxy-2-hydroxypropyl groups, phenyl groups, 4-hydroxyphenyl groups, 2-hydroxyphenyl groups, 4-methoxy phenyl groups and 2-methoxyphenyl groups. Substituents having hydroxyl groups are desirable to use from the standpoint of reactions with the hydrophilic component (b).

The polymers that are used in this invention may contain, as structural components, compounds that do not contain active groups that can react with the hydrophilic component (b) and that have only organosiloxane groups and polymerizable groups having carbon-carbon unsaturated bonds, in addition to the aforementioned monomers (a). Suitable examples of such components can include tris(trimethylsiloxy)silylpropyl (meth)acrylate, bis(trimethylsiloxy)methylsilylpropyl (meth)acrylate, tris(trimethylsiloxy)silyl styrene and bis(trimethylsiloxy)methylsilyl styrene. Further, the polymers that are used in this invention can contain siloxane macromonomers as structural components.

The polymers that are used in this invention may also contain, as structural components, the monomers (a) and monomers in addition to the components containing other organosiloxane groups. In this case, there are no limitations on the monomers as long as they are copolymerizable, and monomers having (meth)acryloyl groups, styryl groups, allyl groups, vinyl groups and other polymerizable carbon-carbon unsaturated bonds can be used. Examples are listed below but are not limited to them. They can include (meth)acrylic acid, itaconic acid, crotonic acid, cinnamic acid, vinyl benzoic acid, alkyl (meth)acrylates such as methyl (meth)acrylate and ethyl (meth)acrylate; polyfunctional (meth)acrylates such as polyalkylene glycol mono(meth)acrylate, polyalkylene glycol monoalkyl ether (meth)acrylate, polyalkylene glycolbis (meth)acrylate, trimethylolpropanetris(meth)acrylate and pentaerythritol tetrakis(meth)acrylate; halogenated alkyl (meth) acrylates such as trifluoroethyl (meth)acrylate and hexafluoroisopropyl (meth)acrylate; hydroxyalkyl (meth)acrylates having hydroxyl groups such as 2-hydroxyethyl (meth)acrylate and 2,3-dihydroxypropyl (meth)acrylate; (meth)acrylamides such as N,N-dimethylacrylamide, N,N-diethylacrylamide, N,N-di-n-propylacrylamide, N,N-diisopropylacrylamide, N,N-di-n-butylacrylamide, N-acryloyl morpholine, N-acryloyl piperidine, N-acryloyl pyrrolidine and N-methyl (meth)acrylamide; aromatic vinyl monomers such as styrene, $\alpha$-methylstyrene and vinyl pyridine; heterocyclic vinyl monomers such as maleimides and N-vinyl pyrrolidone; and N-vinyl carboxylic acid amides. Several types of these monomers may be used at the same time.

It is desirable that the polymers of this invention contain monomers having two or more polymerizable carbon-carbon unsaturated bonds in one molecule as structural components for the purpose of obtaining good mechanical properties and good resistance to disinfectant solutions and wash solutions. The copolymerization ratio of monomers having two or more polymerizable carbon-carbon unsaturated bonds in one molecule should be 0.01 weight % to 10 weight %.

The total copolymerization ratio of monomers (a) and monomers containing other organosiloxane groups in the polymers of this invention, from the standpoints of achieving high oxygen permeability and high hydrophilic properties together with wettability, should be 30 weight % to 99 weight %, preferably, 50 weight % to 98 weight %, and, more preferably, 60 weight % to 95 weight %. Of these, it is desirable for the monomer (a) to be 0.1 to 50 weight % of the total. Several types of monomers containing other organosiloxane groups may be used at the same time as monomer (a).

When a hydrophilic monomer is copolymerized in the polymers that are used in this invention, hydrogels having the physical property of pliability can be obtained as a result of hydration. When a hydrophobic monomer is used as the copolymerization monomer, materials that are hard and of superior oxygen permeability are obtained.

The polymers that are used in this invention may also contain ultraviolet absorbents, pigments and colorants. Further, ultraviolet absorbents, pigments and colorants having polymerizable groups may also be present in copolymerized form.

When the polymers that are used in this invention are obtained by polymerization, it is desirable to add thermal polymerization initiators and photopolymerization initiators of which peroxides and azo compounds are representative in order to facilitate polymerization. When thermal polymerization is performed, substances having optimum decomposition properties at the desired reaction temperatures should be selected and used. In general, azo initiators and peroxide initiators having 10 hour half-life temperatures of 40 to 120°C are desirable. Photopolymerization initiators that can be cited include carbonyl compounds, peroxides, azo compounds, sulfur compounds, halogen compounds and metal salts. These polymerization initiators can be used individually or in mixtures. They can be used in quantities of up to approximately 1 weight %.

When the polymers that are used in this invention are obtained by polymerization, a polymerization solvent can be used. There are no particular limitations on the solvents and various organic and inorganic solvents can be used. Examples that can be cited include water, alcohol solvents such as methyl alcohol, ethyl alcohol, normal propyl alcohol, isopropyl alcohol, normal butyl alcohol, isobutyl alcohol and tert-butyl alcohol; glycol ether solvents such as methyl cellosolve, ethyl cellosolve, isopropyl cellosolve, butyl cellosolve, propylene glycol monomethyl ether, ethylene glycol dimethyl ether, diethylene glycol dimethyl ether and triethylene glycol dimethyl ether; ester solvents such as ethyl acetate, butyl acetate, amyl acetate, ethyl lactate and methyl benzoate; aliphatic hydrocarbon solvents such as normal hexane, normal heptane and normal octane; alicyclic hydrocarbon solvents such as cyclohexane and ethyl cyclohexane; ketone solvents such as acetone, methyl ethyl ketone and methyl isobutyl ketone; aromatic hydrocarbon solvents such as benzene, toluene and xylene; and various petroleum solvents. They can be used individually or in mixtures.

Known methods can be used as polymerization methods and molding methods of the polymers that are used in this invention. For example, there is a method in which they are polymerized and molded into rods or plates and are then processed to the desired shape by cutting and processing, a mold polymerization method and a spin cast polymerization method.

The method of manufacture of the polymers for ophthalmic lenses of this invention is a method in which polymers for ophthalmic lenses of superior wettability are obtained by reacting a polymer containing, as a structural component, a monomer (a) obtained as described above with a hydrophilic component (b) having groups that can react with the active group contained in the monomer (a).

The hydrophilic component (b) that is used in this invention is preferably at least one compound selected from

acid compounds represented by formula (III) and compounds represented by formula (IV):

$$CH_2{=}CH\text{-}CH_2\text{-}O(CH_2CH_2O)_rR^{41} \qquad (III)$$

$$OCN{-}Y{-}\left[NHCOO(CH_2CH_2O)_mR^{42}\right]_n \qquad (IV)$$

wherein, in formulas (III) and (IV), r is an integer of 0 to 500; n is an integer of 1 or 2; $R^{41}$ is hydrogen or an alkyl group that may be substituted; OCN-Y is a residue obtained by eliminating one or more NCO groups from isocyanate compounds having two or more functionality; m is an integer of 1 to 500; and $R^{42}$ is an alkyl group that may be substituted.

Desirable hydrophilic components indicated by formula (III) include monoallyl ethers of (alkoxy)polyethylene glycol. Excellent wettability can be obtained by reacting them with -SiH groups in the presence of platinum compounds which are catalysts of the hydrosilylation reaction.

Desirable examples of hydrophilic components indicated by formula (IV) include bifunctional or higher isocyanate compounds such as isophorone diisocyanate and xylylene diisocyanate and compounds that react with (alkoxy) polyethylene glycol to leave one isocyanate group.

Hydrophilic treatment can be performed and polymers for ophthalmic lenses can be manufactured by bringing polymers containing the monomer (a) into contact with a solution obtained by dissolving or dispersing these hydrophilic components (b) in a solvent that does not impair the reaction. Specific examples include, for example, methods in which the polymer is immersed in a solution containing the hydrophilic component (b), methods in which said solution is sprayed onto the polymer, methods in which said solution is applied to the polymer with a spatula or a brush and methods in which said solution is applied to the polymer by a spin coat method or a dip coat method. The method whereby a great modifying effect can be obtained most simply is the method in which said polymer is immersed in said solution containing the hydrophilic component (b).

There are no particular limitations on temperature when the polymer is immersed in the solution containing the hydrophilic component (b). However, it is ordinarily performed within a temperature range of about -50°C to about 200°C. When workability is considered, a temperature range of -10°C to 150°C is desirable and -5°C to 80°C is most desirable.

The optimum duration of immersion of the polymer in said solution varies depending on the temperature. Generally, it should be up to 100 hours, preferably, up to 24 hours and, more preferably, up to 12 hours. When contact time is excessively long, workability and productivity become poor and there are instances in which deleterious effects such as decrease in oxygen permeability appear.

The solvent for said solution may be any solvent as long as it does not impede the reaction. The substances may be in incompletely dissolved or dispersed states and various solvents can be used. For example, they can be various alcohols such as methanol, ethanol, propanol, 2-propanol, butanol, ethylene glycol, diethylene glycol, triethylene glycol, tetraethylene glycol, polyethylene glycol and glycerol; various aromatic hydrocarbons such as benzene, toluene and xylene; various aliphatic hydrocarbons such as hexane, heptane, octane, decane, petroleum ether, kerosene, ligroin and paraffin; various ketones such as acetone, methyl ethyl ketone and methyl isobutyl ketone; various esters such as ethyl acetate, butyl acetate, methyl benzoate and dioctyl phthalate; various ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether; various nonprotonic polar solvents such as dimethylformamide, dimethylacetamide, N-methyl-2-pyrrolidone, dimethyl imidazolidinone, hexamethyl phosphoric triamide and dimethyl sulfoxide; halogenated solvents such as methylene chloride, chloroform, dichloroethane trichloroethane and trichloroethylene; and freon solvents. Of these, the use of ether compounds such as diethylene glycol dialkyl ethers and of alcohol compounds such as isopropyl alcohol is desirable because they are readily miscible with water and can easily be removed in subsequent processes. Mixtures of two or more substances can be used as solvents.

The solution containing the hydrophilic component (b) that is used in the aforementioned treatment may also contain the hydrophilic component (b) and components other than the solvent.

After said solution treatment, the excess hydrophilic component (b) that has not reacted with the monomer (a) can be removed from the polymer by washing. Various inorganic and organic solvents can be used as the wash solvents. For example, they can include water; various alcohols such as methanol, ethanol, propanol, 2-propanol, butanol, ethylene glycol, diethylene glycol, triethylene glycol, tetraethylene glycol, polyethylene glycol and glycerol; various aromatic hydrocarbons such as benzene, toluene and xylene; various aliphatic hydrocarbons such as hexane, heptane, octane, decane, petroleum ether, kerosene, ligroin and paraffin; various ketones such as acetone, methyl ethyl ketone and

methyl isobutyl ketone; various esters such as ethyl acetate, butyl acetate, methyl benzoate and dioctyl phthalate; various ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether; various nonprotonic polar solvents such as dimethylformamide, dimethylacetamide, N-methyl-2-pyrrolidone, dimethyl imidazolidinone, hexamethyl phosphoric triamide and dimethyl sulfoxide; halogenated solvents such as methylene chloride, chloroform, dichloroethane trichloroethane and trichloroethylene; and freon solvents. Mixtures of two or more solvents can be used as the wash solvents. The wash solvent may contain components in addition to the solvent, for example, inorganic salts, surfactants and detergents.

When the polymer of this invention is used as an ophthalmic lens, the wettability should be such that the dynamic contact angle (immersion rate during advance, 0.1 min/sec) for pure water is 110° or less, preferably, 90° or less and, most preferably, 80° or less. In the case of a hydrogel ophthalmic lens such as a soft contact lens, the water content should be 5% to 70%, preferably, 10% to 65% and, most preferably, 20% to 60%. The oxygen permeability coefficient [($cm^2$/sec)(mL02/(mL·hPa))] should be greater than $45 \times 10^{-11}$, preferably, greater than $50 \times 10^{-11}$ and, most preferably, greater than $60 \times 10^{-11}$ in terms of the oxygen permeability. In the case of hydrogel ophthalmic lenses, serious consideration is given to pliability, for which reason the tensile elastic modulus should be 0.1 to 2 MPa.

The method of manufacture of polymers for ophthalmic lenses of this invention is particularly suited to the manufacture of polymers for ophthalmic lenses such as contact lenses, intraocular lenses and artificial cornea of superior wettability and oxygen permeability.

## Examples

We shall now describe this invention in specific terms by means of examples. However, this invention is not limited by them.

### Determination Methods

The various determinations in these examples were performed by the methods described below.

(1) Proton nuclear magnetic resonance spectrum

Determinations were performed using a Model EX270 manufactured by JEOL Ltd. Chloroform-d was used as the solvent.

(2) Infrared absorption spectrum

Determinations were made using a Model FTS-7 manufactured by Bio-Rad Laboratories, Inc. It was measured on rock salt plate by a liquid film method.

(3) Dynamic angle of contact

A sample, in the form of film, having a size on the order of 5 mm x 10 mm x 0.2 mm cut from a substance in the contact lens shape was used, and the dynamic angle of contact was determined during advance in pure water using a Model WET-6000 manufactured by Rhesca Co., Ltd. The immersion speed was 0.1 mm/second and the immersion depth was 7 mm.

(4) Oxygen permeability coefficient

The oxygen permeability coefficient in water of 35°C was determined using a Seikaken-shiki film oxygen permeability meter manufactured by RIKA SEIKI KOGYO Co., Ltd.

(5) Modulus of elasticity (tensile modulus of elasticity)

A sample [width (smallest part), 5mm; length, 14 mm; thickness, on the order of 0.2 mm] was cut from a substance in the contact lens shape using a stipulated punch mold, and determinations were made using a Model RTM-100 Tensilon manufactured by Orientec Corporation. The drawing rate was set to 100 mm/min and the distance between grips was set to 5 mm.

(6) Water content

A sample in the form of a contact lens was used. The sample was dried for 16 hours at 40°C in a vacuum dryer and the weight (Wd) of the sample was determined. Following that, it was immersed in pure water and was impregnated with water overnight in a constant temperature tank at 40°C, after which the water on the surface was wiped off with Kimwipe and its weight (Ww) was measured. The water content was found by the following formula.

$$\text{Water content (\%)} = 100 \times (\text{Ww} - \text{Wd}) / \text{Ww}$$

Synthesis 1

The compound of formula (J1) (manufactured by Shin-Etsu Chemical Co,. Ltd., 101.0 g), hydroquinone (0.24 g) and potassium hydroxide (1.95 g) were introduced into a 200 ml three-neck distillation flask equipped with a condensing tube, a stirrer and a dropping funnel, and methacrylic acid (51.7 g) was added dropwise over a period of approximately 30 minutes in a nitrogen atmosphere as the mixture was being stirred at room temperature. After the dropwise addition had been completed, a reaction was carried out for 8 hours at 100°C as the mixture was being stirred. The materials were allowed to stand overnight, after which hexane (50 ml) was added and the mixture was stirred for 2 hours at room temperature. The insoluble matter was removed by filtration and the hexane solution was washed several times with 0.5 M sodium hydroxide, after which it was washed three times with a saturated saline solution. Anhydrous magnesium sulfate was added and dehydration was effected, after which the magnesium sulfate was removed by filtration and the solvent was removed with a rotary vacuum evaporator. The volatile components were removed under reduced pressure and at 60°C over a four hour period, and a colorless transparent liquid (57.7 g) was obtained. The proton nuclear magnetic resonance spectrum was determined and analyzed, and, as a result, it was confirmed that the principal component was the monomer containing a silicon group as represented by formula (M1) from the fact that peaks were detected in the vicinity of 0.1 ppm (21 H), in the vicinity of 0.4 ppm (2H), in the vicinity of 1.6 ppm (2H), in the vicinity of 1.9 ppm (3H), in the vicinity of 2.6 ppm (1H), in the vicinity of 3.3 to 4.3 ppm (7H), in the vicinity of 5.6 ppm (1H) and in the vicinity of 6.1 ppm (1H).

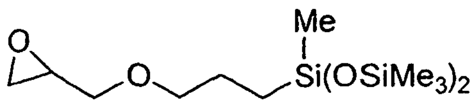

(J1)

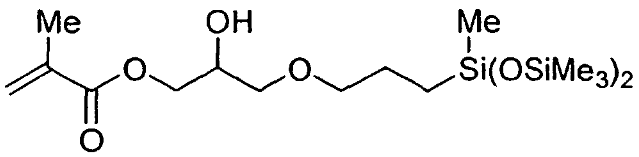

(M1)

Synthesis 2

Hexane (50 g), methanol (50 g) and water (100 g) were introduced into a 1 liter three-neck distillation flask equipped with a stirrer and a dropping funnel. The flask was immersed in an ice bath and a mixture of 3-methacryloxypropyl trimethoxysilane (J2) (74.5 g) and dimethyl chlorosilane (170 g) was added dropwise over an approximately 1 hour period as the contents of the flask were being stirred vigorously with a three-one motor. After the dropwise addition was completed, the mixture was stirred for 3 hours at 5 to 20°C. When water (approximately 200 ml) was added, the mixture was separated into two layers and the top layer was collected with a separatory funnel. It was washed with a saturated sodium carbonate aqueous solution, saturated saline solution, saturated sodium hydrogencarbonate aqueous solution and saturated saline solution in that order. Dehydration was performed with anhydrous sodium sulfate, after which the solvent was removed with a rotary vacuum evaporator. Purification was performed by depressurization distillation and a colorless transparent liquid (106.4 g) was obtained. As a result of determination and analysis of the proton nuclear magnetic resonance spectrum, it was confirmed that the principal component was 3-methacryloxypropyltris(dimethylsiloxy)silane as represented by formula (M2).

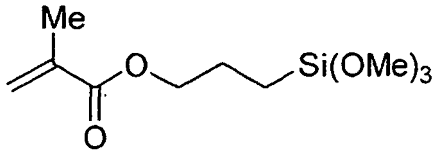

(J2)

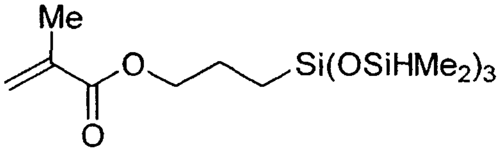

(M2)

Synthesis 3

A compound (40 g) of which the principal component was a compound of formula (M2) obtained in Synthesis 2 described above, ethylene glycol monoallyl ether (40 g), isopropyl alcohol (100 g), a 10% ethanol solution (1 g) of potassium acetate and a 0.5% isopropyl alcohol solution (1 g) of chloroplatinic acid were introduced into a 500 ml three-neck distillation flask equipped with a stirrer and a reflux condenser. The mixture was heated for 7 hours as the isopropyl alcohol was being refluxed. The isopropyl alcohol was removed by means of a rotary vacuum evaporator, after which 200 ml of ethyl acetate and a saturated saline solution were added. When this was done, the mixture was separated into two layers and the top layer was collected with a separatory funnel. It was washed 5 times with a saturated saline solution and was dehydrated with anhydrous sodium sulfate. The solvent was removed with a rotary vacuum evaporator and a colorless transparent liquid (32.6 g) was obtained. It was confirmed from the infrared absorption spectrum that absorption attributable to -SiH in the vicinity of 2200 $cm^{-1}$ was extinguished, and it was confirmed that the compound represented by formula (M3) was the principal component.

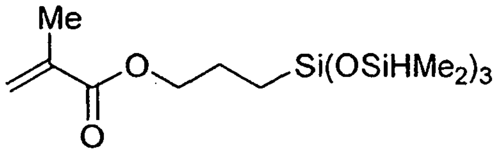

(M2)

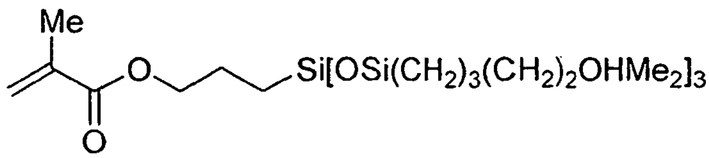

(M3)

Synthesis 4

Isophorone diisocyanate (17.6 g) represented by formula (J3), methoxy polyethylene glycol (160 g) of a molecular weight of approximately 2000, diethylene glycol dimethyl ether (240 g) that had been dehydrated by a molecular sieve and 0.035 g of dibutyltin laurate were introduced into a 1 liter three-neck distillation flask equipped with a stirrer and a reflux condenser, a reaction was carried out by heating for 12 hours at 60°C in a nitrogen atmosphere, and the compound represented by formula (M4) was obtained. It was confirmed from the infrared absorption spectrum that absorption attributable to isocyanate in the vicinity of 2290 $cm^{-1}$ had been reduced by half, and it was confirmed that the isophorone diisocyanate and the methoxy polyethylene glycol had reacted with each other.

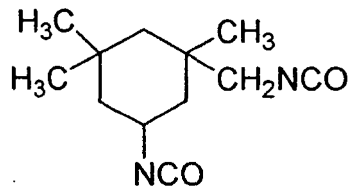

(J3)

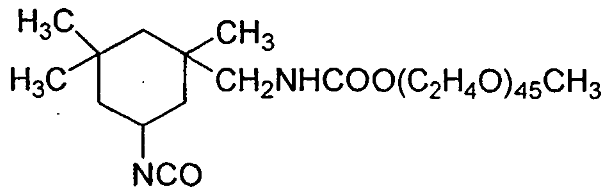

(M4)

Example 1

The organosiloxane group-containing monomer (30 parts by weight) obtained in Synthesis 1, tris(trimethylsiloxy) silylpropyl methacrylate (30 parts by weight), N,N-dimethyl acrylamide (40 parts by weight), polyethylene glycol dimethacrylate ("Blenmer" PDE600, manufactured by NOF CORPORATION; 1 part by weight) and diethylene glycol dimethyl ether (20 parts by weight) were mixed uniformly and "Darocure" 1173 (manufactured by CIBA Specialty Chemicals Inc.; 0.5 part by weight) was added as a polymerization initiator, after which this monomer mixture was deaerated in an argon atmosphere. It was then poured into a contact lens mold made of a transparent resin (poly 4-methylpentene-1) in a glove box in a nitrogen atmosphere, polymerization was performed by photo-irradiation (1 mW/$cm^2$, 30 minutes) using an inset attraction lamp, and a lens-shaped sample was obtained.

The lens-shaped sample that was obtained was immersed in the solution that was obtained in Synthesis 4, and the materials were heated for 12 hours at 60°C. After the reaction was completed, it was immersed successively in aqueous solutions of diethylene glycol dimethyl ether, the concentrations of which were decreased. Finally, it was immersed in pure water and a hydrogel lens was obtained. This lens was sealed in a vial filled with a boric acid buffer solution (pH 7.1 to 7.3) and was subjected to boiling treatment for 30 minutes at 121°C. After it had cooled, the lens-shaped sample was removed from the vial and immersed in pure water. The table below shows the physical properties of the sample that was obtained and of an untreated sample. By comparison to the untreated sample, it can be seen that the contact angle was decreased and that there were improved properties.

Table 1

| | Untreated sample | Treated sample |
|---|---|---|
| Water content | 36% | 40% |
| Advancing contact angle | 90° | 78° |
| Modulus of elasticity | 0.69 MPa | 0.55 MPa |
| Oxygen permeability coefficient [($cm^2$/sec) ($mLO_2$/(mL·hPa))] | $71 \times 10^{-11}$ | $71 \times 10^{-11}$ |

Example 2

The organosiloxane group-containing monomer (40 parts by weight) obtained in Synthesis 1, tris(trimethylsiloxy) silylpropyl methacrylate (20 parts by weight), N,N-dimethyl acrylamide (20 parts by weight), polyethylene glycol dimethacrylate ("Blenmer" PDE600, manufactured by NOF CORPORATION; 1 part by weight) and diethylene glycol dimethyl ether (20 parts by weight) were mixed uniformly, and a lens-shaped sample was obtained in the same way as in Example 1.

The lens-shaped sample that was obtained was immersed in a mixed solution of 20 g of triethylamine, 0.4 g of succinic anhydride and 0.16 g of pyridine, and the materials were stirred slowly for 9 hours at room temperature. After the reaction was completed, successive solution replacement was performed in the same way as in Example 1 and a hydrogel lens was obtained. It was subjected similarly to boiling treatment for 30 minutes at 121°C. The table below shows the physical properties of the sample that was obtained and of an untreated sample. By comparison to the

untreated sample, it can be seen that the contact angle was greatly decreased and that there were marked improving effects.

Table 2

| | Untreated sample | Treated sample |
|---|---|---|
| Water content | 10% | 28% |
| Advancing contact angle | 90° | 55° |

Example 3

The organosiloxane group-containing monomer (10 parts by weight) obtained in Synthesis 2, tris(trimethylsiloxy) silylpropyl methacrylate (55 parts by weight), N,N-dimethyl acrylamide (35 parts by weight), triethylene glycol dimethacrylate (0.5 part by weight) and diethylene glycol dimethyl ether (20 parts by weight) were mixed uniformly, and a lens-shaped sample was obtained in the same way as in Example 1.

The lens-shaped sample that was obtained was immersed in a mixed solution of 20 g of polyethylene glycol monoallyl ether of a molecular weight of approximately 1500, 80 g of diethylene glycol dimethyl ether that had been dehydrated with molecular sieve and 0.02 g of chloroplatinic acid, and a reaction was carried out for 9 hours at 60°C. After the reaction was completed, solutions were replaced successively in the same way as in Example 1 and a hydrogel lens was obtained. It was subjected similarly to boiling treatment for 30 minutes at 121°C. The table below shows the physical properties of the sample that was obtained and of an untreated sample. By comparison to the untreated sample, it can be seen that the contact angle was greatly decreased and that there were marked improvement in properties. It can also be seen that there was a superior balance of other physical properties.

Table 3

| | Untreated sample | Treated sample |
|---|---|---|
| Water content | 25% | 40% |
| Advancing contact angle | 90° | 65° |
| Modulus of elasticity | 0.69 MPa | 0.62 MPa |
| Oxygen permeability coefficient [($cm^2$/sec) ($mLO_2$/(mL·hPa))] | $94 \times 10^{-11}$ | $71 \times 10^{-11}$ |

Example 4

The organosiloxane group-containing monomer (10 parts by weight) obtained in Synthesis 3, tris(trimethylsiloxy) silylpropyl methacrylate (55 parts by weight), N,N-dimethyl acrylamide (35 parts by weight), triethylene glycol dimethacrylate (0.5 part by weight) and diethylene glycol dimethyl ether (20 parts by weight) were mixed uniformly, and a lens-shaped sample was obtained in the same way as in Example 1.

The lens-shaped sample that was obtained was immersed, in the same way as in Example 1, in a diethylene glycol dimethyl ether solution of an equimolar addition product of the isophorone diisocynate and the methoxypolyethylene glycol monomethacrylate of a molecular weight of approximately 2000, both obtained in Synthesis 4, after 0.035 g of dibutyltin laurate had been added, and it was heated for 7 hours at 60°C. After the reaction was completed, solutions were replaced successively in the same way as in Example 1 and a hydrogel lens was obtained. It was subjected to boiling treatment for 30 minutes. The table below shows the physical properties of the sample that was obtained and of an untreated sample. By comparison to the untreated sample, it can be seen that the contact angle was greatly decreased and that there were marked improvement in properties. It can also be seen that there was a superior balance of other physical properties.

Table 4

| | Untreated sample | Treated sample |
|---|---|---|
| Water content | 32% | 42% |
| Advancing contact angle | 90° | 65° |
| Modulus of elasticity | 0.76 MPa | 0.55 MPa |
| Oxygen permeability coefficient | $86 \times 10^{-11}$ | $75 \times 10^{-11}$ |

(continued)

| | Untreated sample | Treated sample |
|---|---|---|
| [ml(STP)cm·cm$^{-2}$· sec$^{-1}$· mmHg$^{-1}$] | | |

## Industrial Applicability

By means of this invention, polymers for ophthalmic lenses of high oxygen permeability and superior wettability can be obtained.

## Claims

1. A method for manufacturing polymers for ophthalmic lenses comprising reacting a polymer having, as a polymerization component, at least one monomer (a) having organosiloxane groups and a polymerizable group having a carbon-carbon unsaturated bond with at least one hydrophilic component (b) selected from compounds represented by formula (III) and formula (IV):

$$CH_2=CH\text{-}CH_2\text{-}O(CH_2CH_2O)_rR^{41} \qquad (III)$$

$$OCN-Y\left[NHCOO(CH_2CH_2O)_mR^{42}\right]_n \qquad (IV)$$

wherein, in formulas (III) and (IV), r is an integer of 0 to 500; n is an integer of 1 or 2; $R^{41}$ is hydrogen or an alkyl group that may be substituted; m is an integer of 1 to 500; OCN-Y is a residue obtained by eliminating one or more NCO groups from isocyanate compounds having two or more functionality; and $R^{42}$ is an alkyl group that may be substituted.

2. The method of claim 1 wherein the monomer (a) is at least one monomer that is selected from a group represented by formula (I) below:

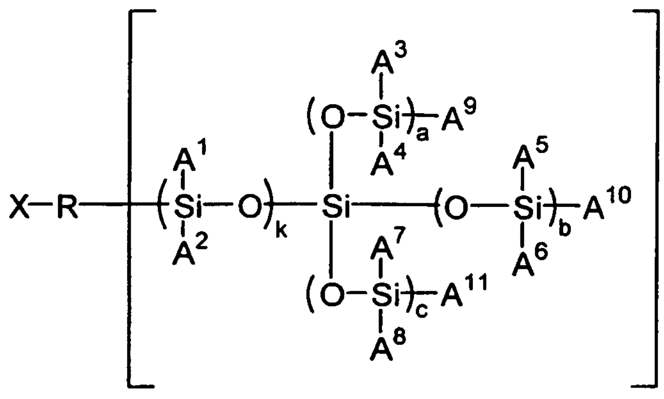

(I)

wherein, X is a polymerizable group having carbon-carbon unsaturated bonds; R is selected from the group consisting of alkyl groups that may contain ether bonds and that may be substituted; $A^1$ to $A^{11}$ are independently selected from the group consisting of H, alkyl groups that may be substituted and aryl groups that may be substituted; k is an integer of 0 to 10; a, b and c are, respectively and independently, integers of 0 to 10, excepting the case k = a = b = c = 0; and d is an integer of 1 or 2.

3. The method of claim 2 wherein X is (x1) or (x2) as indicated below:

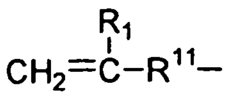

(x1)

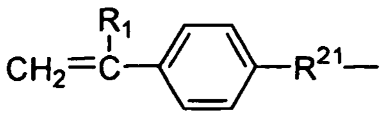

(x2)

wherein, in formulas (x1) and (x2), $R^1$ is H or a methyl group; $R^{11}$ is selected from the group consisting of -COO-, $-COO(CH_2)_2NHCONR^{31}-$,$-CONHCONR^{31}-$ and $-CONR^{31}-$; $R^{21}$ is a direct bond and $-CONR^{31}-$; and $R^{31}$ is a substituent selected from the group consisting of a hydrogen atom, an alkyl group that may be substituted and an aryl group that may be substituted.

**4.** The method of claim 2 wherein R in formula (I) is represented by formula (II) below:

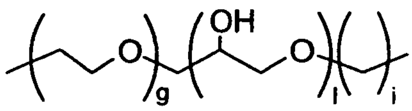

(II)

wherein, in formula (II), g is an integer of 0 to 3; 1 is an integer of 0 to 1; and i is an integer of 0 to 10.

**5.** An ophthalmic lens comprising polymers which are formed by chemical bonding of a polymer having, as a polymerization component, at least one monomer (a) selected from a group represented by formula (I):

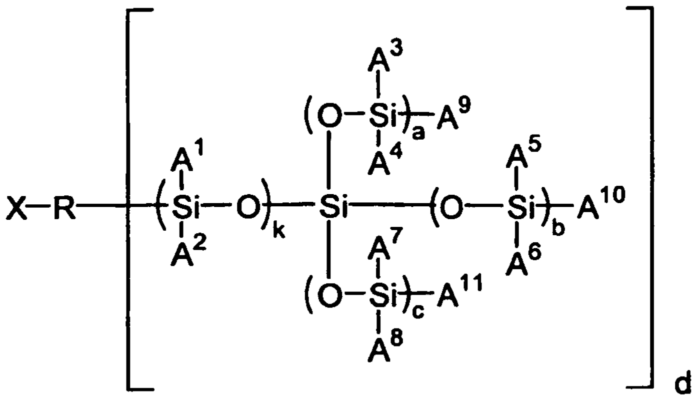

(I)

wherein, X is a polymerizable group having carbon-carbon unsaturated bonds; R is selected from the group consisting of alkyl groups that may contain ether bonds and that may be substituted; $A^1$ to $A^{11}$ are independently selected from the group consisting of H, alkyl groups that may be substituted and aryl groups that may be substituted; k is an integer of 0 to 10; a, b and c are, respectively and independently, integers of 0 to 10, excepting the case k = a = b = c = 0; and d is an integer of 1 or 2; with at least one hydrophilic component (b) selected from compounds represented by formula (III) and formula (IV):

$$CH_2=CH-CH_2-O(CH_2CH_2O)_rR^{41} \qquad (III)$$

$$OCN-Y\left[NHCOO(CH_2CH_2O)_mR^{42}\right]_n \quad (IV)$$

wherein, in formulas (III) and (IV), r is an integer of 0 to 500; n is an integer of 1 or 2; $R^{41}$ is hydrogen or an alkyl group that may be substituted; m is an integer of 1 to 500; OCN-Y is a residue obtained by eliminating one or more NCO groups from isocyanate compounds having two or more functionality; and $R^{42}$ is an alkyl group that may be substituted.

## Patentansprüche

**1.** Verfahren zur Herstellung von Polymeren für augenoptische Linsen, welches umfasst, dass ein Polymer, das, als eine Polymerisierungskomponente, wenigstens ein Monomer (a) mit Organosiloxangruppen und einer polymerisierbaren Gruppe mit einer ungesättigten Kohlenstoff-Kohlenstoff-Bindung aufweist, mit wenigstens einer hydrophilen Komponente (b) umgesetzt wird, die ausgewählt ist aus Verbindungen, die dargestellt werden durch Formel (III) und Formel (IV):

$$CH_2{=}CH\text{-}CH_2\text{-}O(CH_2CH_2O)_rR^{41} \quad (III)$$

$$OCN-Y\left[NHCOO(CH_2CH_2O)_mR^{42}\right]_n \quad (IV)$$

worin, in den Formeln (III) und (IV), r eine ganze Zahl von 0 bis 500 ist; n eine ganze Zahl 1 oder 2 ist; $R^{41}$ Wasserstoff oder eine Alkylgruppe, die substituiert sein kann, ist; m eine ganze Zahl von 1 bis 500 ist; OCN-Y ein Rest ist, der erhalten wird durch Eliminierung von einer oder mehreren NCO-Gruppen aus Isocyanatverbindungen mit zwei oder mehr Funktionalitäten; und $R^{42}$ eine Alkylgruppe ist, die substituiert sein kann.

**2.** Verfahren nach Anspruch 1, wobei das Monomer (a) wenigstens ein Monomer ist, das ausgewählt ist aus der Gruppe, die dargestellt wird durch Formel (I) unten:

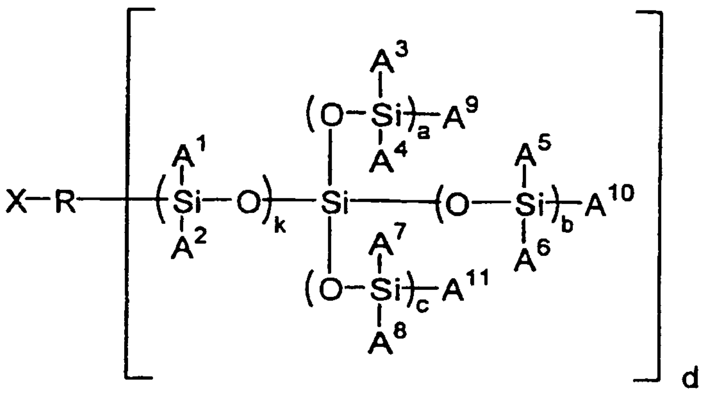

(I)

worin X eine polymerisierbare Gruppe mit ungesättigten Kohlenstoff-Kohlenstoff-Bindungen ist; R ausgewählt ist aus der Gruppe, bestehend aus Alkylgruppen, die Etherbindungen enthalten können und die substituiert sein können; $A^1$ bis $A^{11}$ unabhängig ausgewählt sind aus der Gruppe, bestehend aus H, Alkylgruppen, die substituiert sein können, und Arylgruppen, die substituiert sein können; k eine ganze Zahl von 0 bis 10 ist; a, b und c, jeweils und unabhängig, ganze Zahlen von 0 bis 10 sind, ausgenommen den Fall k = a = b = c = 0; und d eine ganze Zahl 1 oder 2 ist.

3. Verfahren nach Anspruch 2, wobei X (x1) oder (x2) ist, wie unten angegeben:

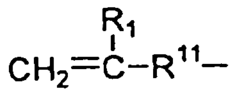

(x1)

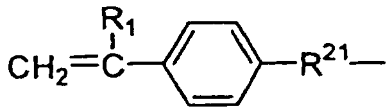

(x2)

worin, in den Formeln (x1) und (x2), $R^1$ H oder eine Methylgruppe ist; $R^{11}$ ausgewählt ist aus der Gruppe, bestehend aus -COO-, $-COO(CH_2)_2NHCONR^{31}-$, $-CONHCONR^{31}-$ und $-CONR^{31}-$; $R^{21}$ eine direkte Bindung und $-CONR^{31}-$ ist; und $R^{31}$ ein Substituent ist, der ausgewählt ist aus der Gruppe, bestehend aus einem Wasserstoffatom, einer Alkylgruppe, die substituiert sein kann, und einer Arylgruppe, die substituiert sein kann.

4. Verfahren nach Anspruch 2, wobei R in Formel (I) dargestellt wird durch Formel (II) unten:

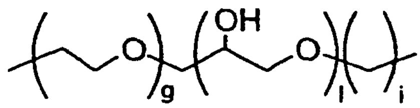

(II)

worin, in Formel (II), g eine ganze Zahl von 0 bis 3 ist; 1 eine ganze Zahl von 0 bis 1 ist; und i eine ganze Zahl von 0 bis 10 ist.

5. Augenoptische Linse, die Polymere umfasst, die gebildet sind durch chemische Bindung eines Polymers, das, als eine Polymerisierungskomponente, mindestens ein Monomer (a) aufweist, das ausgewählt ist aus einer Gruppe, die dargestellt wird durch Formel (I):

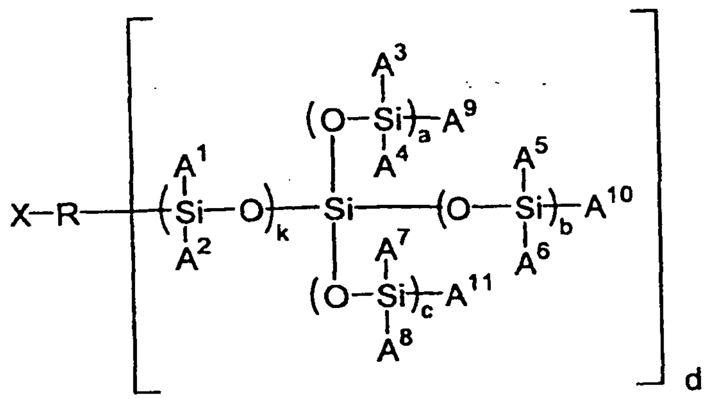

(I)

worin X eine polymerisierbare Gruppe mit ungesättigten Kohlenstoff-Kohlenstoff-Bindungen ist; R ausgewählt ist aus der Gruppe, bestehend aus Alkylgruppen, die Etherbindungen enthalten können und die substituiert sein können; $A^1$ bis $A^{11}$ unabhängig ausgewählt sind aus der Gruppe, bestehend aus H, Alkylgruppen, die substituiert sein können, und Arylgruppen, die substituiert sein können; k eine ganze Zahl von 0 bis 10 ist; a, b und c, jeweils und unabhängig, ganze Zahlen von 0 bis 10 sind, ausgenommen den Fall k = a = b = c = 0; und d eine ganze Zahl 1 oder 2 ist; mit wenigstens einer hydrophilen Komponente (b), die ausgewählt ist aus Verbindungen, die dargestellt werden durch

Formel (III) und (IV)

$$CH_2{=}CH\text{-}CH_2\text{-}O(CH_2CH_2O)_rR^{41} \qquad (III)$$

$$OCN{-}Y{\left[NHCOO(CH_2CH_2O)_mR^{42}\right]}_n \qquad (IV)$$

worin, in den Formeln (III) und (IV), r eine ganze Zahl von 0 bis 500 ist; n eine ganze Zahl 1 oder 2 ist; $R^{41}$ Wasserstoff oder eine Alkylgruppe, die substituiert sein kann, ist; m eine ganze Zahl von 1 bis 500 ist; OCN-Y ein Rest ist, der erhalten wird durch Eliminierung von einer oder mehreren NCO-Gruppen aus Isocyanatverbindungen mit zwei oder mehr Funktionalitäten; und $R^{42}$ eine Alkylgruppe ist, die substituiert sein kann.

## Revendications

1. Procédé de fabrication de polymères pour des lentilles ophtalmiques qui comprend la réaction d'un polymère ayant, en tant que composant de polymérisation, au moins un monomère (a) ayant des groupes organosiloxane et un groupe polymérisable ayant une liaison carbone-carbone insaturée avec au moins un composant hydrophile (b), choisi parmi les composés représentés par la formule (III) et la formule (IV) :

$$CH_2{=}CH\text{-}CH_2\text{-}O(CH_2CH_2O)_rR^{41} \qquad (III)$$

$$OCN{-}Y{\left[NHCOO(CH_2CH_2O)_mR^{42}\right]}_n \qquad (IV)$$

où, dans les formules (III) et (IV), r est un nombre entier de 0 à 500 ; n est un nombre entier de 1 ou 2 ; $R^{41}$ est un atome d'hydrogène ou un groupe alkyle qui peut être substitué ; m est un nombre entier de 1 à 500 ; OCN-Y est un résidu pouvant être obtenu par élimination d'un ou plusieurs groupes NCO de composés isocyanates ayant deux fonctionnalités ou plus ; et $R^{42}$ est un groupe alkyle qui peut être substitué.

2. Procédé selon la revendication 1, dans lequel le monomère (a) est au moins un monomère qui est choisi dans un groupe représenté par la formule (I) ci-dessous :

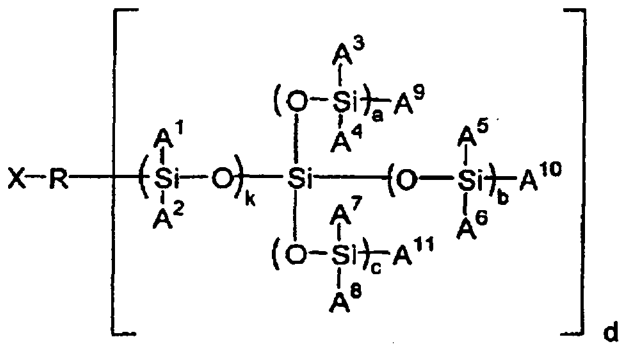

(I)

dans laquelle, X est un groupe polymérisable ayant des liaisons carbone-carbone insaturées ; R est choisi dans le groupe constitué par des groupes alkyles qui peuvent contenir des liaisons éther et qui peuvent être substitués ; $A^1$ à $A^{11}$ sont indépendamment choisis dans le groupe constitué par H, des groupes alkyles qui peuvent être substitués et des groupes aryles qui peuvent être substitués ; k est un nombre entier de 0 à 10 ; a, b et c sont, respectivement et indépendamment, des nombres entiers de 0 à 10, à l'exception du cas dans lequel k = a = b = c

= 0 ; et d est un nombre entier de 1 ou 2.

**3.** Procédé selon la revendication 2, dans lequel X est (x1) ou (x2) tel qu'indiqué ci-dessous :

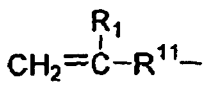

(x1)

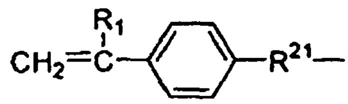

(x2)

où, dans les formules (x1) et (x2), $R^1$ est H ou un groupe méthyle ; $R^{11}$ est choisi dans le groupe constitué par -COO-, $-COO(CH_2)_2NHCONR^{31}-$, $-CONHCONR^{31}-$ et $-CONR^{31}-$ ; $R^{21}$ est une liaison directe et $-CONR^{31}-$ ; et $R^{31}$ est un substituant choisi dans le groupe constitué par un atome d'hydrogène, un groupe alkyle qui peut être substitué et un groupe aryle qui peut être substitué.

**4.** Procédé selon la revendication 2, dans lequel R dans la formule (I) est représenté par la formule (II) ci-dessous :

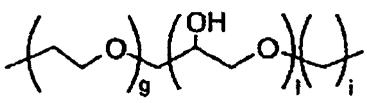

(II)

où, dans la formule (II), g est un nombre entier de 0 à 3 ; 1 est un nombre entier de 0 à 1 ; et i est un nombre entier de 0 à 10.

**5.** Lentille ophtalmique comprenant des polymères qui sont formés par liaison chimique d'un polymère ayant, en tant que composant de polymérisation, au moins un monomère (a) choisi dans un groupe représenté par la formule (I) :

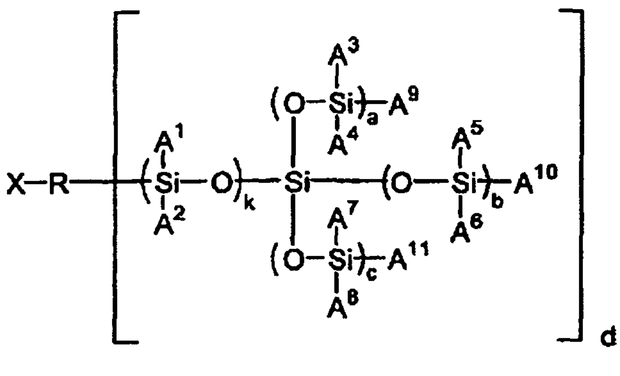

(I)

dans laquelle, X est un groupe polymérisable ayant des liaisons carbone-carbone insaturées ; R est choisi dans le groupe constitué par des groupes alkyles qui peuvent contenir des liaisons éther et qui peuvent être substitués ; $A^1$ à $A^{11}$ sont indépendamment choisi dans le groupe constitué par H, des groupes alkyles qui peuvent être substitués et des groupes aryles qui peuvent être substitués ; k est un nombre entier de 0 à 10 ; a, b et c sont, respectivement et indépendamment, des nombres entiers de 0 à 10, à l'exception du cas dans lequel k = a = b = c = 0 ; et d est un nombre entier de 1 ou 2 ; avec au moins un composant hydrophile (b) choisi parmi les composés représentés par la formule (III) et la formule (IV) :

$CH_2=CH-CH_2-O(CH_2CH_2O)_rR^{41}$ (III)

$$OCN-Y\left[NHCOO(CH_2CH_2O)_mR^{42}\right]_n \qquad (IV)$$

où, dans les formules (III) et (IV), r est un nombre entier de 0 à 500 ; n est un nombre entier de 1 ou 2 ; $R^{41}$ est un atome d'hydrogène ou un groupe alkyle qui peut être substitué ; m est un nombre entier de 1 à 500 ; OCN-Y est un résidu pouvant être obtenu par élimination d'un ou plusieurs groupes NCO de composés isocyanates ayant deux fonctionnalités ou plus ; et $R^{42}$ est un groupe alkyle qui peut être substitué.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60142324 A
- JP 54024047 A
- EP 1424339 A
- EP 1403296 A
- WO 0072052 A